# EUROPÄISCHE PATENTSCHRIFT

(11) **EP 0 571 829 B1**
(45) Veröffentlichungstag und Bekanntmachung des Hinweises auf die Patenterteilung: **18.03.1998**
(21) Anmeldenummer: 93107821.6
(22) Anmeldetag: 13.05.1993
(51) Int. Cl.: C08G 63/52, C09D 167/06, C09D 175/14, C08G 18/68

(54) **Ungesättigte Polyesterpolyole und ihre Verwendung in Zweikomponenten-Polyurethanlacken**
Unsaturated polyester polyols and their use in two-component polyurethane coatings
Polyesterpolyols insaturés et leur utilisation dans des revêtements en polyuréthane à deux composantes

(30) Priorität: 26.05.1992 DE 4217363
(43) Veröffentlichungstag der Anmeldung: 01.12.1993
(73) Patentinhaber: BAYER AG, 51368 Leverkusen (DE)
(72) Erfinder: Wamprecht, Christian, Dr., W-4040 Neuss 22 (DE); Henning, Wolfgang, Dr., W-5067 Kürten (DE); Petzoldt, Joachim, Dr., W-4018 Langenfeld (DE); Meixner, Jürgen, Dr., W-4150 Krefeld (DE)

(56) Entgegenhaltungen:
- EP-A- 0 318 800
- EP-A- 0 424 745
- EP-A- 0 494 442
- DE-A- 2 609 207
- Encyclopedia of Polymer Science and Engineering, vol.12, 1988, pages 2,4-6,256,281.

## Beschreibung

Die vorliegende Erfindung betrifft neue Polyesterpolyole auf Basis ausgewählter Ausgangsmaterialien und ihre Verwendung in Kombination mit bestimmten Lackpolyisocyanaten als Bindemittel beziehungsweise Bindemittelkomponente in Zweikomponenten-Polyurethanlacken zur Beschichtung von Kunststofformteilen mit hoher Vergilbungs- und Teerfleckenbestandigkeit.

Es ist seit langem bekannt, wenig flexible Substrate, wie z.B. Metall oder Holz mit Zweikomponenten-Polyurethanlacken auf Basis von Hydroxylgruppen aufweisenden Polyestern, Polyethern oder Polyacrylaten und organischen Polyisocyanaten zu beschichten. Die resultierenden Lacküberzüge zeichnen sich inbesondere durch eine ausgezeichnete Härte, eine sehr gute Haftung und hohe Wetterbeständigkeit aus. Die chemischen Grundlagen dieser Lacke und Überzüge werden u.a. in "Lackkunstharze", Hans Wager/Hans Friedrich Sarx, Carl Hanser Verlag, München, Seiten 153 bis 173, 1971, beschrieben.

Die Zweikomponenten-Polyurethanlacke des Standes der Technik führen jedoch oft zu hochvernetzten Lacküberzügen, deren Elastizität und Vergilbungsneigung, insbesondere bei Bestrahlung mit kurzwelligem UV-Licht, den diesbezüglichen Anforderungen an Überzüge für flexible Substrate oft nicht genügt.

Besonders im Automobilbau werden in zunehmendem Umfang flexible Kunststoffteile zur Erhöhung der Sicherheit eingesetzt. So müssen z.B. in einigen Ländern Kraftfahrzeuge mit Stoßstangen ausgerüstet sein, die einen Aufprall mit einer bestimmten Geschwindigkeit (z.B. 5 MPH) gegen eine feste Barriere ohne Beschädigung überstehen, wobei gleichzeitig Funktionsteile wie Scheinwerfer, Blinkleuchter, Türen und Hauben in ihrer Funktion nicht beeinträchtigt werden dürfen. Diese und andere, noch weiter gehende Forderungen haben in vielen Ländern dazu geführt, daß die bisherigen Stoßfänger aus Metall beim PKW-Bau nicht mehr verwendet werden und daß statt dessen komplette Vorder- und Heckteile aus hochflexiblen Materialien zum Einsatz kommen, die die Forderungen nach schadfreier Rückstellbarkeit des Stoßfängers nach dem Aufprall erfüllen (Vermeiden von Schäden bei Bagatellunfällen).

Als hochflexible Kunststoffe für diese Anwendung haben sich u.a. halbharte, elastomere Polyurethane (z.B. ®Bayflex-Typen der Bayer AG, Leverkusen), die aus Zweikomponenten-Polyurethanbildnergemischen nach der Reaktionsspritzgußtechnik in geschlossenen Formen, gegebenenfalls unter Aufschäumung hergestellt werden, thermoplastische Polyurethane (z.B. ®Desmophan-Typen der Bayer AG oder ®Texin-Typen der Miles Inc., Pittsburgh, USA), die nach der Spritzgußtechnik verarbeitet werden, als auch die unterschiedlichsten Kautschuktypen als geeignet erwiesen.

Im Fahrzeugbau seit einigen Jahren zum Stand der Technik gehörende Kunststoffteile auf Basis dieser Chemiewerkstoffe sind relativ groß und bestimmen deshalb wesentlich das Aussehen des Fahrzeugs. Aus diesen Gründen ist eine Lackierung der rohen Teile erforderlich. Es kommt hinzu, daß die Oberflächen der Kunststoffe bei Bewitterung abgebaut werden und daher gegen Witterungseinflüsse geschützt werden müssen.

Elastische Lackierungen sind jedoch auch für weniger elastische Kunststoffteile erforderlich, um mechanische Schädigung der Teile zu verhindern. So müssen beispielsweise harte aber zähe Thermoplaste mit hochelastischen, äußerst beständigen Lacken lackiert werden, um zu verhindern, daß der Lackfilm bei mechanischer Beschädigung oder durch andere äußere Einflüsse reißt und die Risse sich in dem kompakten Kunststoff fortsetzen.

Es gelingt zwar auch unter Verwendung der bekannten Zweikomponenten-Systeme des Standes der Technik hochflexible Lacke herzustellen, die in bezug auf Elastizität und Kälteflexibilität vollkommen ausreichend sind. Vor allem ist dies durch Verwendung von bestimmten Polyhydroxylpolyestern als wesentliche Polyolkomponente möglich, die vorwiegend aus aliphatischen Diolen aufgebaut sind und allenfalls eine unwesentlich oberhalb 2 liegende Hydroxylfunktionalität aufweisen. Der Nachteil von Zweikomponenten-Polyurethanlacken auf Basis derartiger Polyesterdiole und der üblichen Lackpolyisocyanate besteht jedoch in dem Umstand, daß die Lacküberzüge über eine zu geringe Wetterresistenz und Kreidungsbeständigkeit verfügen und damit die Glanzhaltung der aus derartigen Lacksystemen aufgebauten Überzüge völlig unzureichend ist. Als besonders nachteilig erweist sich die Vergilbungsanfälligkeit solcher Lacksysteme bei Bestrahlung mit kurzwelligem UV-Licht. Ein weiterer schwerwiegender Nachteil ist die mangelhafte Teerfleckenbestandigkeit entsprechender Lackfilme. Die gilt insbesondere für die Systeme der DE-OS 3 421 122, die ansonsten den genannten Anforderungen an elastische Kunststofflacke weitgehend entsprechen.

Eine wesentliche Verbesserung hinsichtlich der Vergilbungsanfälligkeit von hochelastischen PUR-Lacken bei Bestrahlung mit kurzwelligem UV-Licht kann mit den Polyesterpolyolen, die in der EP-A 0 318 800 beschrieben sind, erzielt werden. Weiterhin können mit diesen Polyesterpolyolen auch Verbesserungen im Hinblick auf Teerfleckenbeständigkeit entsprechender PUR-Lacke erreicht werden, jedoch sind diese Verbesserungen nach heutigen Anforderungen nicht ausreichend.

Es war daher die der Erfindung zugrundeliegende Aufgabe, ein neues Zweikomponenten-Polyurethanlack-System zur Verfügung zu stellen, das diesen besonderen Anforderungen genügt und insbesondere für die Lackierung von elastischen Kunststoffteilen optimal geeignet ist. Das neue Lacksystem sollte insbesondere folgenden Anforderungen gleichzeitig genügen:
1. Vergilbungsfreie Filmoberflächen bei Einwirkung von kurzwelligem UV-Licht:
   Der Lackfilm muß der Bestrahlung mit kurzwelligem UV-Licht (Wellenlänge < 400 nm) über einen Zeitraum von mindestens 200 h ohne Vergilbung standhalten.
2. Tieftemperatur-Elastizität:
   Auch bei -20°C darf der Film bei den genannten Aufprallgeschwindigkeiten des Kunststoffs nicht reißen. Die mechanischen Eigenschaften des Kunststoffs sollen durch die Lackierung möglichst wenig beeinträchtigt werden.
3. Beständigkeit gegen Teerflecken:
   Der Lackfilm muß der Einwirkung einer speziellen teerhaltigen Testlösung unbeschadet widerstehen können.
4. Gute Glanzhaltung:
   Der Lackfilm auf den Kunststoffteilen sollte möglichst haltbar sein. Er darf unter Witterungseinflüssen nicht schneller abbauen als derjenige auf der Karosserie.
5. Keine Nachversprödung bei Bewitterung:
   Auch nach längerer Bewitterung darf der Film nicht nachverspröden, d.h. die Tieftemperaturelastizität soll sich während der Bewitterung nicht verschlechtern.
6. Niedrige Trockentemperatur:
   Die Wärmestandfestigkeit solcher großen Kunststoffteile ist begrenzt. Die erforderlichen Trockentemperaturen und -zeiten sollten daher aus diesen, aber auch aus Gründen der Energieersparnis möglichst niedrig sein.
7. Reparaturfähigkeit:
   Die Trocknungsbedingungen eines solchen Systems sollten neben der Erstlackierung auch eine Reparaturlackierung bei 80°C oder Raumtemperatur ermöglichen.

Wie jetzt überraschenderweise gefunden wurde, gelingt es durch die Verwendung der nachstehend näher beschriebenen, erfindungsgemäßen Polyesterpolyole auf Basis ausgewählter Ausgangsmaterialien als Polyhydroxylkomponente beziehungsweise wesentlichen Teil der Polyhydroxylkomponente in Zweikomponenten-Polyurethanlacken die gestellte Aufgabe zu lösen und insbesondere teerfleckenbeständige Lackfilme zu erhalten.

Gegenstand der Erfindung sind Polyesterpolyole des Hydroxylzahlbereichs von 80 bis 250, die Umsetzungsprodukte von
a) 52 bis 60 Mol-% einer Polyolkomponente mit
b) 48 bis 40 Mol-% einer Dicarbonsäure-Komponente
darstellen, dadurch gekennzeichnet, daß
a) die Polyolkomponente aus (i) 10 bis 50 Mol-% eines zweiwertigen, aliphatischen Alkohols mit mindestens zwei Kohlenstoffatomen, der von Neopentylglykol verschieden ist, oder eines Gemischs mehrerer derartiger Alkohole, (ii) 5 bis 40 Mol-% eines mindestens dreiwertigen, aliphatischen Alkohols mit mindestens 3 Kohlenstoffatomen oder eines Gemischs mehrerer derartiger Alkohole, (iii) 10 bis 40 Mol-% Diole mit cycloaliphatischen Einheiten und (iv) 10 bis 60 Mol-% Neopentylglykol besteht, und
b) die Dicarbonsäurekomponente aus (v) 0 bis 47,5 Mol- % einer aliphatischen, gesättigten Dicarbonsäure oder einem Anhydrid einer derartigen Säure mit mindestens 2 Kohlenstoffatomen oder eines Gemischs mehrerer derartiger Säuren oder Anhydride und (vi) 52,5 bis 100 Mol-% einer aliphatischen, ungesättigten Dicarbonsäure oder deren Anhydrid mit mindestens 4 Kohlenstoffatomen oder Gemischen derartiger Säuren oder Anhydride besteht,
wobei sich die unter a) und b) gemachten Prozentangaben jeweils zu 100 ergänzen.

Gegenstand der Erfindung ist auch die Verwendung dieser erfindungsgemäßen Polyesterpolyole, gegebenenfalls in Abmischung mit anderen organischen Polyhydroxylverbindungen als Bindemittelkomponente für Zweikomponenten-Polyurethanlacke, die Lackpolyisocyanate sowie gegebenenfalls die in der Polyurethanlacktechnologie üblichen Hilfs- und Zusatzmittel enthalten, bei der Herstellung von Lacküberzügen auf Kunststofformteilen.

Ähnliche, jedoch nicht identische Polyesterpolyole, wie die erfindungsgemäßen Verbindungen, werden in der älteren deutschen Patentanmeldung P 4100204.0 beschrieben und als Polyolkomponente in Hitze-härtbaren Einkomponenten-Beschichtungsmitteln verwendet.

Die besonders gute Eignung der erfindungsgemäßen Polyesterpolyole für die erfindungsgemäße Verwendung ist auf die erfindungsgemäße Auswahl der den Polyesterpolyolen zugrundeliegenden Ausgangsmaterialien und deren Mengenverhältnis zurückzuführen. Die erfindungsgemäßen Polyesterpolyole weisen Hydroxylzahlen innerhalb des Bereichs von 80 bis 250, vorzugsweise 120 bis 200, Säurezahlen von unter 12, vorzugsweise 0,5 bis 10 und ein mittleres, aus der Stöchiometrie der eingesetzten Ausgangsmaterialien berechenbares Molekulargewicht von 800 bis 10.000, vorzugsweise 800 bis 5.000 auf. Die erfindungsgemäßen Polyesterpolyole sind hochviskose, farblose, klare Harze, die in Lacklösungsmitteln wie beispielsweise Kohlenwasserstoffen wie Toluol, Xylol oder höheren Alkylbenzolen, Estern wie Ethylacetat, Butylacetat, Methylglykolacetat, Ethylglykolacetat, Methoxypropylacetat, Ketonen wie Methylethylketon oder Methylisobutylketon oder deren Gemischen klar löslich sind.

Erfindungswesentlich ist außerdem, daß die erfindungsgemäßen Polyesterpolyole aus den obengenannten ausgewählten Aufbaukomponenten a) und b) hergestellt worden sind.

Die Polyolkomponente a) setzt sich aus den Einzelbestandteilen (i) bis (iv) zusammen.

Bei der Einzelkomponente (i) handelt es sich um zweiwertige, aliphatische Alkohole mit mindestens 2, vorzugsweise 2 bis 6 Kohlenstoffatomen mit Ausnahme von Neopentylglykol wie z.B. Ethylenglykol, Propandiol-1,2 und -1,3, Butandiol-1,2 und -1,4, Pentandiol-1,5, und besonders bevorzugt, Hexandiol-1,6. Gemische derartiger Diole können ebenfalls als Komponente (i) verwendet werden. Die Komponente (i) wird in einer Menge von 10 bis 50 Mol-%, vorzugsweise 15 bis 45 Mol-%, bezogen auf die Gesamtmenge der Komponente a), eingesetzt.

Bei der Komponente (ii) handelt es sich um höher als zweiwertige, aliphatische Alkohole mit mindestens 3, vorzugsweise 3 bis 6 Kohlenstoffatomen wie z.B. Trimethylolpropan, Glycerin und/oder Pentaerythrit. Die Komponente (ii) wird in Mengen von 5 bis 40, vorzugsweise 10 bis 35 Mol-%, bezogen auf die Gesamtmenge der Komponente a) eingesetzt.

Bei der Komponente (iii) handelt es sich beispielsweise um Cycloalkandiole wie 1,2-, 1,3- und 1,4-Cyclohexandiol, 2,2-Bis(4-hydroxycyclohexyl)-propan, Bis-hydroxymethyl-hexahydro-tricyclodecan, 1,2-, 1,3-und insbesondere 1,4-Bis-(hydroxymethyl)-cyclohexan. Die Komponente (iii) wird in Mengen von 10 bis 40 Mol-%, vorzugsweise 15 bis 35 Mol-%, bezogen auf die Gesamtmenge der Komponente a) eingesetzt.

Bei der Komponente (iv) handelt es sich um Neopentylglykol (2,2-Dimethyl-propandiol-1,3). Die Komponente (iv) wird in Mengen von 10 bis 60 Mol-%, vorzugsweise 15 bis 55 Mol-%, bezogen auf die Gesamtmenge der Komponente a) eingesetzt.

Bei der Dicarbonsäurekomponente b) handelt es sich um ein Gemisch aus den Einzelkomponenten (v) und (vi). In dem Gemisch liegen 0 bis 47,5, vorzugsweise 5 bis 40 und besonders bevorzugt 10 bis 30 Mol-% der Komponente (v) und 52,5 bis 100, vorzugsweise 60 bis 95 und besonders bevorzugt 70 bis 90 Mol-% der Komponente (vi), bezogen auf die Gesamtmenge der Komponente b), vor.

Bei der Komponente (v) handelt es sich um eine aliphatische, gesättigten Dicarbonsäure mit mindestens 2, vorzugsweise 4 bis 6 Kohlenstoffatomen, wie z.B. Oxalsäure, Bernsteinsäure, Glutarsäure und insbesondere-Adipinsäure. Gemische derartiger Säuren können selbstverständlich ebenfalls eingesetzt werden. Grundsätzlich möglich, jedoch im allgemeinen nicht üblich wäre auch die Verwendung der intramolekularen Säureanhydride dieser Säuren.

Bei der Komponente (vi) handelt es sich um aliphatische, ungesättigte Dicarbonsäuren oder deren Anhydride mit mindestens 4, vorzugsweise 4 bis 5 Kohlenstoffatomen wie beispielsweie Fumarsäure, Maleinsäure oder Itaconsäure beziehungsweise die Anhydride dieser Säuren. Besonders bevorzugt wird als Komponente (vi) Maleinsäureanhydrid eingesetzt. Beliebige Gemische derartiger Säuren beziehungsweise Säureanhydride können ebenfalls als Komponente (vi) verwendet werden.

Die im Zusammenhang mit den Komponenten a) und b) gemachten Prozentangaben ergänzen sich jeweils zu 100.

Bei der Herstellung der Polyesterpolyole kommen 52 bis 60, vorzugsweise 52 bis 58 Mol-% der Komponente a) und 48 bis 40, vorzugsweise 48 bis 42 Mol-% der Komponente b) zum Einsatz, wobei sich auch hier die genannten Prozentangaben auf 100 ergänzen.

Die Herstellung der erfindungsgemäßen Polyester erfolgt in an sich bekannter Weise nach Methoden wie sie beispielsweise in "Ullmanns Encyclopädie der technischen Chemie", Verlag Chemie Weinheim, 4. Auflage (1980), Band 19, Seiten 61 ff. oder von H. Wagner und H.F. Sarx in "Lackkunstharze", Carl Hanser Verlag, München (1971), Seiten 86 bis 152 ausführlich beschrieben sind. Die Veresterung erfolgt gegebenenfalls in Gegenwart einer katalytischen Menge eines üblichen Veresterungskatalysators wie z.B. Säuren, Basen oder Übergangsmetallverbindungen wie z.B. Titantetrabutylat bei ca. 80 bis 260°C, vorzugsweise 100 bis 230°C. Die Veresterungsreaktion wird so lange durchgeführt, bis die angestrebten Werte für die Hydroxyl- und Säurezahl erreicht sind.

Bei der erfindungsgemäßen Verwendung der erfindungsgemäßen Polyesterpolyole werden diese gegebenenfalls in Abmischung mit anderen, aus der Polyurethanlacktechnologie bekannten, organischen Polyhydroxylverbindungen als Polyhydroxyl-Komponente eingesetzt. Bei diesen anderen Polyhydroxylverbindungen kann es sich um die üblichen Polyester-, Polyether- oder Polyacrylat-Polyole handeln. Vorzugsweise werden als weitere organische Polyhydroxylverbindungen, falls solche überhaupt neben den erfindungswesentlichen Polyesterpolyolen zum Einsatz gelangen, die an sich bekannten Polyacrylatpolyole des Standes der Technik eingesetzt.

Als Abmischkomponente geeignete Polyacrylatpolyole sind in Lacklösungsmitteln der bereits beispielhaft genannten Art lösliche Copolymerisate von (i) Hydroxyalkyl-(meth)acrylaten, wie sie durch Addition von insgesamt 1 Mol Ethylenoxid und/oder Propylenoxid an 1 Mol (Meth)Acrylsäure erhalten werden, mit (ii) anderen olefinisch ungesättigten Monomeren wie z.B. Butylacrylat, Methylmethacrylat, Styrol, Acrylsäure, Acrylnitril, Methacrylnitril und dergleichen. Der Hydroxylgruppengehalt dieser Polyacrylatpolyole liegt im allgemeinen zwischen 1 und 5 Gew.-%.

Bei der erfindungsgemäßen Verwendung der erfindungsgemäßen Polyesterpolyole können diese in Abmischung mit bis zu 90, vorzugsweise bis zu 50 Hydroxyläquivalent-%, bezogen auf alle Polyhydroxylverbindungen, an anderen Polyolen der beispielhaft genannten Art zum Einsatz gelangen. Besonders bevorzugt werden jedoch die erfindungsgemäßen Polyesterpolyole als alleinige Polyol-Komponente bei der erfindungsgemäßen Verwendung eingesetzt. Reaktionspartner für die Polyol-Komponente bei der erfindungsgemäßen Verwendung der erfindungsgemäßen Polyesterpolyole sind die üblichen "Lackpolyisocyanate", das heißt, vor allem die bekannten, Urethangruppen oder insbesondere Biuretgruppen beziehungsweise Isocyanuratgruppen aufweisenden Modifizierungsprodukte von einfachen Diisocyanaten wie z.B. 1,6-Diisocyanatohexan, 1-Isocyanato-3,3,5-trimethyl-5-isocyanatomethyl-cyclohexan (Isophorondiisocyanat), 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/oder cycloaliphatisch gebundenen Isocyanatgruppen eingesetzt.

Zu den Urethangruppen aufweisenden "Lackpolyisocyanaten" gehören insbesondere die Umsetzungsprodukte von 2,4- und gegebenenfalls 2,6-Diisocyanatotoluol mit unterschüssigen Mengen an Trimethylolpropan beziehungsweise dessen Gemischen mit einfachen Diolen wie z.B. den isomeren Propan- oder Butandiolen. Die Herstellung derartiger, Urethangruppen aufweisender Lackpolyisocyanate in praktisch monomerfreier Form ist beispielsweise in DE-PS 1 090 196 beschrieben.

Zu den Biuretgruppen aufweisenden Lackpolyisocyanaten, die bei der erfindungsgemäßen Verwendung besonders bevorzugt sind, gehören insbesondere jene auf Basis von 1,6-Diisocyanatohexan, deren Herstellung beispielsweise in EP-B1-0003505, DE-PS 1 101 394, US-PS 3 358 010 oder US-PS 3 903 127 beschrieben ist.

Zu den ebenfalls bevorzugten, Isocyanuratgruppen aufweisenden Lackpolyisocyanaten gehören insbesondere die Trimerisate beziehungsweise Mischtrimerisate der oben beispielhaft genannten Diisocyanate, wie z.B. die Isocyanuratgruppen aufweisenden Polyisocyanate auf Basis Diisocyanatotoluol gemäß GB-PS 1 060 430, GB-PS 1 506 373 oder GB-PS 1 485 564, die Mischtrimerisate von Diisocyanatotoluol mit 1,6-Diisocyanatohexan, die beispielsweise gemäß DE-PS 1 644 809 oder DE-OS 3 144 672 zugänglich sind, und insbesondere die aliphatischen beziehungsweise die aliphatisch-cycloaliphatischen Trimerisate beziehungsweise Mischtrimerisate auf Basis von 1,6-Diisocyanatohexan und/oder Isophorondiisocyanat, die beispielsweise gemäß US-PS 4 324 879, US-PS 4 288 586, DE-OS 3 100 262, DE-OS 3 100 263, DE-OS 3 033 860 oder DE-OS 3 144 672 zugänglich sind. Die bei der erfindungsgemäßen Verwendung zum Einsatz gelangenden Lackpolyisocyanate weisen im allgemeinen einen Isocyanatgehalt von 5 bis 25 Gew.-% und einen Restgehalt an, zu ihrer Herstellung eingesetzten, monomeren Diisocyanaten von vorzugsweise unter 2 Gew.-% auf. Selbstverständlich können auch beliebige Gemische der beispielhaft genannten Lackpolyisocyanate zum Einsatz gelangen.

In den bei der erfindungsgemäßen Verwendung zum Einsatz gelangenden Zweikomponenten-Polyurethanlacken liegen die Polyolkomponente und die Polyisocyanatkomponente in einem Äquivalentverhältnis von Isocyanatgruppen zu Hydroxylgruppen von 5:1 bis 1:2, vorzugsweise 1,5:1 bis 1:1,2 entsprechenden Mengen vor. Die durch Vermischen der beiden Komponenten erhaltenen Zweikomponenten-Bindemittel haben nur eine begrenzte Verarbeitungszeit von ca. 2 bis 48 Stunden und werden entweder als solche (lösungsmittelfreie Klarlacke), vorzugsweise jedoch unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise Lösungsmittel in Betracht, wie z.B. Ethylacetat, Butylacetat, Methylethylketon, Methylisobutylketon, Ethylenglykolmonoethylether-acetat, Methoxypropylacetat, Toluol, Xylol, Testbenzin oder beliebige Gemische dieser Lösungsmittel.

Die Lösungsmittel werden in einer Menge von bis zu 70, vorzugsweise bis zu 40 Gew.-%, bezogen auf Gesamtgemisch, mitverwendet.

Weitere, gegebenenfalls mitzuverwendende Hilfs- und Zusatzmittel sind z.B. Weichmacher wie z.B. Trikresylphosphat oder Phthalsäurediester, Chlorparaffine, Pigmente und Füllstoffe, wie Titandioxid, Bariumsulfat, Kreide, Ruß; Katalysatoren wie z.B. N,N-Dimethylbenzylamin, N-Methylmorpholin, Zinkoctoat, Zinn-II-octoat oder Dibutylzinndilaurat; Verlaufsmittel; Verdickungsmittel, gegebenenfalls Stabilisatoren, wie substituierte Phenole, organofunktionelle Silane als Haftvermittler sowie Lichtschutzmittel und UV-Absorber. Derartige Lichtschutzmittel sind beispielsweise sterisch gehinderte Amine, wie sie z.B, in DE-OS 3 993 655 (= US-PS 4 123 418 und US-OS 4 110 304) und DE-OS 2 456 864 (= US-OS 3 993 655 und US-PS 4 221 701) beschrieben sind. Besonders bevorzugte Verbindungen sind: Bis-(1,2,2,2,6,6-pentamethylpiperidyl-4)-sebacat, Bis-(2,2,6,6-tetramethylpiperidyl-4)-sebacat, n-Butyl(3,5-di-tert.-butyl-4-hydroxybenzyl)-malonsäure-bis-(1,2,2,6,6,-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z.B. Molekularsieb-Zeolithen, entfernt werden.

Die Trocknung der bei der erfindungsgemäßen Verwendung resultierenden Lackfilme kann bei Raumtemperatur erfolgen und bedarf keiner Temperaturerhöhung, um die eingangs erwähnten, optimalen Eigenschaften zu erreichen. Wegen der verhältnismäßig langsam verlaufenden Trocknung bei Raumtemperatur ist jedoch oftmals eine Temperaturerhöhung auf ca. 60 bis 120°C, vorzugsweise 80 bis 100°C während eines Zeitraumes von 20 bis 40 Minuten empfehlenswert. Eine höhere Trocknungstemperatur und somit eine Verkürzung des Einbrennprozesses ist zwar möglich, jedoch besteht die Gefahr, daß sich die mit den Lacken beschichteten Kunststoffteile verformen.

Die erfindungsgemäß zum Einsatz gelangenden Lacke eignen sich vor allem für die Lackierung von Kunststoffen, jedoch auch für Metalle und andere Substrate. Besonders vorteilhaft eignen sich die erfindungsgemäß zum Einsatz gelangenden Lacke zum Lackieren von flexiblen Kunststoffteilen, wie sie beim Automobilbau Anwendung finden.

Wegen der gleichermaßen guten Eignung der zum Einsatz gelangenden erfindungsgemäßen Lacke für Kunststoffe und Metalle eignen sich diese insbesondere auch hervorragend zur Lackierung von Konstruktionen wie z.B. Außenteilen von Automobilen, die in moderner Gemischbauweise aus Kunststoff- und Metallteilen hergestellt werden. Die besonderen Vorteile der erfindungsgemäß zum Einsatz gelangenden Lacke begünstigen diese "on line"-Lackierung von Automobilaußenteilen, weil die Härtung der Lackfilme bereits bei niedrigen Temperaturen erfolgen kann, so daß die Kunststoffe keiner übermäßigen Temperaturbelastung ausgesetzt werden, und weil die resultierenden Lackfilme eine ausgezeichnete Witterungsbeständigkeit und Elastizität aufweisen, so daß dekorative Lackierungen für eine lange Zeitdauer unverändert erhalten bleiben und Beanspruchungen durch Stoß oder Schlag schadlos überstehen.

Hervorzuheben ist in diesem Zusammenhang auch die ausgezeichnete Steinschlagfestigkeit von erfindungsgemäß hergestellten Automobil-Decklackierungen.

Die wichtigste und gegenüber dem Stand der Technik entscheidenste Verbesserung der erfindungsgemäß hergestellten Automobil-Decklackierungen ist jedoch ihre hervorragende Teerfleckenbeständigkeit, die, wie die Vergleichsbeispiele deutlich zeigen, ihre Ursache in der Auswahl von speziellen Monomerbausteinen bei der Herstellung der Polyesterpolyolkomponente hat.

Die mit den erfindungsgemäß zum Einsatz gelangenden Zweikomponenten-Lacken erhaltenen Lackfilme erfüllen darüber hinaus in optimaler Weise zwei an sich gegensätzliche Forderungen nämlich eine ausgezeichnete Tieftemperatur-Elastizität bei gleichzeitig hoher Glanzhaltung und Vergilbungsbeständigkeit bei Bestrahlung mit Licht niedriger Wellenlänge, z.B. kurzwelliges UV-Licht.

Die erfindungsgemäß zum Einsatz gelangenden Lacke können selbstverständlich nach allen üblichen Methoden der Lacktechnologie wie z.B. Streichen, Spritzen oder Tauchen auf die zu beschichtenden Substrate aufgetragen werden. Die erfindungsgemäßen Lacke eignen sich sowohl zur Herstellung von Grundierungen als auch zur Herstellung von Zwischenschichten als auch zur Herstellung von Deckschichten auf den zu lackierenden Substraten.

Die nachfolgenden Beispiele dienen zur weiteren Erläuterung der Erfindung.

### Beispiele

### Allgemeine Herstellvorschrift für die Polyesterpolyole:

Die Polyole und die ungesättigte(n) Dicarbonsäure(n)/Anhydrid(e) werden in einen Reaktor, der mit Rührer, Heizung, automatischer Temperatursteuerung, Kolonne und Vorlage ausgerüstet ist, eingewogen und auf 100 bis 150°C erhitzt, wobei ein Stickstoffstrom durch die inhomogene Rohstoffmischung durchgeleitet wird. Nach Zugabe der restlichen Dicarbonsäuren wird das Rohstoffgemisch innerhalb von 4 bis 8 Stunden unter Rühren und Durchleiten von Stickstoff auf 200°C aufgeheizt. Dabei wird die am Kopf der Kolonne gemessene Temperatur bei maximal 105°C gehalten. Die Schmelze wird hierbei homogen und klar. Sobald die Kopftemperatur 90°C unterschreitet, wird die Kolonne entfernt und mit erhöhtem Stickstoffstrom bis zu einer Säurezahl < 3 mg KOH/g Substrat auskondensiert.

Es werden farblose Harze erhalten, die in Methoxypropylacetat beziehungsweise Butylacetat oder Mischungen derselben gelöst werden.

Die Zusammensetzung und die Daten der einzelnen, auf diesem Wege hergestellten Polyester sind in den Beispielen 1 bis 11 angegeben. Die gemachten Mengenangaben in "Mol" beziehen sich, wie aus den Gewichtsangaben in "g" ersichtlich, nicht auf die tatsächlichere Anzahl der jeweiligen "Mole", sondern auf das Molverhältnis. Die Zahlenangaben bezüglich der Hydroxyl- und Säurezahlen beziehen sich auf "mg KOH/g".

### Beispiel 1 (erfindungsgemäß)

| Polyester aus | Einwaage |
|---|---|
| 1,0 Mol Hexandiol | 555 g |
| 1,0 Mol Trimethylolpropan | 630 g |
| 1,5 Mol 1,4-Bis(hydroxymethyl)-cyclohexan | 1016 g |
| 1,5 Mol Neopentylglykol | 736 g |
| 0,4 Mol Adipinsäure | 275 g |
| 3,6 Mol Maleinsäureanhydrid | 1661 g |

Hydroxylzahl: 163
Säurezahl: 2,5

### Beispiel 2 (erfindungsgemäß)

| Polyester aus | Einwaage |
|---|---|
| 1,0 Mol Hexandiol | 554 g |
| 1,0 Mol Trimethylolpropan | 628 g |
| 1,5 Mol 1,4-Bis(hydroxymethyl)-cyclohexan | 1013 g |
| 1,5 Mol Neopentylglykol | 733 g |
| 0,5 Mol Adipinsäure | 343 g |
| 3,5 Mol Maleinsäureanhydrid | 1610 g |

Hydroxylzahl: 159
Säurezahl: 2,3

### Beispiel 3 (erfindungsgemäß)

| Polyester aus | Einwaage |
|---|---|
| 1,5 Mol Hexandiol | 833 g |
| 1,0 Mol Trimethylolpropan | 630 g |
| 1,25 Mol 1,4-Bis(hydroxymethyl)-cyclohexan | 846 g |
| 1,25 Mol Neopentylglykol | 613 g |
| 0,5 Mol Adipinsäure | 344 g |
| 3,5 Mol Maleinsäureanhydrid | 1615 g |

Hydroxylzahl: 158
Säurezahl: 1,5

### Beispiel 4 (erfindungsgemäß)

| Polyester aus | Einwaage |
|---|---|
| 2,0 Mol Hexandiol | 1114 g |
| 1,0 Mol Trimethylolpropan | 632 g |
| 1,0 Mol 1,4-Bis(hydroxymethyl)-cyclohexan | 679 g |
| 1,0 Mol Neopentylglykol | 492 g |
| 0,5 Mol Adipinsäure | 345 g |
| 3,5 Mol Maleinsäureanhydrid | 1620 g |

Hydroxylzahl: 162
Säurezahl: 1,9

### Beispiel 5 (erfindungsgemäß)

| Polyester aus | Einwaage |
|---|---|
| 1,0 Mol Hexandiol | 548 g |
| 1,0 Mol Trimethylolpropan | 622 g |
| 1,5 Mol 1,4-Bis(hydroxymethyl)-cyclohexan | 1003 g |
| 1,5 Mol Neopentylglykol | 726 g |
| 0,8 Mol Adipinsäure | 543 g |
| 3,2 Mol Maleinsäureanhydrid | 1458 g |

Hydroxylzahl: 157
Säurezahl: 2,5

### Beispiel 6 (erfindungsgemäß)

| Polyester aus | Einwaage |
|---|---|
| 1,0 Mol Hexandiol | 542 g |
| 1,0 Mol Trimethylolpropan | 614 g |
| 1,5 Mol 1,4-Bis(hydroxymethyl)-cyclohexan | 991 g |
| 1,5 Mol Neopentylglykol | 718 g |
| 1,2 Mol Adipinsäure | 804 g |
| 2,8 Mol Maleinsäureanhydrid | 1260 g |

Hydroxylzahl: 157
Säurezahl: 2,1

### Beispiel 7 (erfindungsgemäß)

| Polyester aus | Einwaage |
|---|---|
| 1,0 Mol Hexandiol | 535 g |
| 1,0 Mol Trimethylolpropan | 607 g |
| 1,5 Mol 1,4-Bis(hydroxymethyl)-cyclohexan | 979 g |
| 1,5 Mol Neopentylglykol | 709 g |
| 1,6 Mol Adipinsäure | 1060 g |
| 2,4 Mol Maleinsäureanhydrid | 1067 g |

Hydroxylzahl: 159
Säurezahl: 2,4

### Beispiel 8 (erfindungsgemäß)

| Polyester aus | Einwaage |
|---|---|
| 1,0 Mol Hexandiol | 532 g |
| 1,0 Mol Trimethylolpropan | 603 g |
| 1,5 Mol 1,4-Bis(hydroxymethyl)-cyclohexan | 973 g |
| 1,5 Mol Neopentylglykol | 705 g |
| 1,8 Mol Adipinsäure | 1185 g |
| 2,2 Mol Maleinsäureanhydrid | 972 g |

Hydroxylzahl: 152
Säurezahl: 0,6

### Beispiel 9 (erfindungsgemäß)

| Polyester aus | Einwaage |
|---|---|
| 1,0 Mol Hexandiol | 529 g |
| 1,0 Mol Trimethylolpropan | 600 g |
| 1,5 Mol 1,4-Bis(hydroxymethyl)-cyclohexan | 967 g |
| 1,5 Mol Neopentylglykol | 700 g |
| 1,9 Mol Adipinsäure | 1309 g |
| 2,1 Mol Maleinsäureanhydrid | 879 g |

Hydroxylzahl: 154
Säurezahl: 2,7

### Beispiel 10 (Vergleich)

| Polyester aus | Einwaage |
|---|---|
| 1,0 Mol Hexandiol | 529 g |
| 1,0 Mol Trimethylolpropan | 600 g |
| 1,5 Mol 1,4-Bis(hydroxymethyl)-cyclohexan | 967 g |
| 1,5 Mol Neopentylglykol | 700 g |
| 2,2 Mol Adipinsäure | 1440 g |
| 1,8 Mol Maleinsäureanhydrid | 791 g |

Hydroxylzahl: 146
Säurezahl: 0,8

### Beispiel 11 (Vergleich)

| Polyester aus | Einwaage |
|---|---|
| 1,0 Mol Hexandiol | 522 g |
| 1,0 Mol Trimethylolpropan | 593 g |
| 1,5 Mol 1,4-Bis(hydroxymethyl)-cyclohexan | 956 g |
| 1,5 Mol Neopentylglykol | 692 g |
| 2,4 Mol Adipinsäure | 1552 g |
| 1,6 Mol Maleinsäureanhydrid | 695 g |

Hydroxylzahl: 150
Säurezahl: 1,4

### Beispiel 12 (Verwendung)

Dieses Beispiel beschreibt die Herstellung gebrauchsfertiger Lacke auf Basis der Polyesterpolyole gemäß den Beispielen 1 bis 11, deren Applikation und die Prüfung der resultierenden Lackfilme.

Zur Beurteilung der allgemeinen Lackeigenschaften wurden Weißlacke hergestellt; dabei wurden die Polyesterpolyole aus den Beispielen 1 bis 11 mit verschiedenen Zusätzen sowie Weißpigmenten versehen und auf einem Schüttelblock ("Red Devil") angerieben.

Anschließend wurde mit einem Lackpolyisocyanat versetzt, wobei ein NCO/OH-Verhältnis von ca. 1,3:1 eingehalten wurde.

Als "Lackpolyisocyanat" diente ein isocyanuratgruppenhaltiges Polyisocyanat auf Basis von 1,6-Diisocyanatohexan (®Desmodur N 3390, Handelsprodukt der Bayer AG, 90%ig gelöst in Butylacetat/Solvent-Naphta 100 (Volumenverhältnis = 1:1), NCO-Gehalt der Lösung: 19,4 Gew.-%).

Bezogen auf Festharz (Summe der festen Anteile an Polyol und Polyisocyanat) wurden folgende Anteile an Zusatzstoffen verwendet:

**Tabelle 1**

| Bestandteile | Gew.-% fest auf fest |
|---|---|
| Zinkoctoat (10 % in 1-Methoxypropylacetat-2) | 0,2 |
| | |
| Siliconöl als Verlaufsmittel (®Baysilon-Lackadditiv OL 17 der Bayer AG; 10 % in 1-Methoxypropylacetat-2) | 0,1 |
| | |
| (®Tinuvin 292 (Lichtschutzmittel der Fa. Ciba-Geigy, Basel; 10 % in Xylol) | 1,0 |
| | |
| (®Tinuvin 900 (Lichtschutzmittel der Fa. Ciba-Geigy, Basel; 10 % in Xylol) | 1,0 |
| | |
| Titandioxid (Rutiltyp; ®Kronos 2160 der Fa. Kronos-Titan, Leverkusen) | 60,0 |
| | |
| Mittel der Verhinderung des Absetzens (®Bentone 38 der Fa. Kronos-Titan, Leverkusen; 10%iger Aufschluß in ®Solvesso/®Antiterra U 17:1) | 1,0 |

Als Lösemittel wurde ein Gemisch aus Ethylacetat, 1-Methoxypropyl-acetat-2 und Methylethylketon (1:1:1) verwendet; es wurde verdünnt bis auf einen Gehalt von:

| | |
|---|---|
| | 33 Gew.-% Bindemittel |
| | 20 Gew.-% Pigment |
| ca. | 1 Gew.-% Additive |
| ca. | 46 Gew.-% Lösemittel |

Die Auslaufzeit (DIN 53211; 4-mm-Düse) betrug ca. 18 Sekunden. Damit sind die Lacke spritzfertig eingestellt. Die Standzeit bei Aufbewahrung im geschlossenen Gebinde betrug ca. 60 bis 80 Stunden.

Die Lacke wurden auf Glasplatten aufgespritzt (Schichtdicke ca. 100 µm Naßfilm), 45 Minuten bei 80°C getrocknet und 14 Tage bei Raumtemperatur gelagert. Die Trockenfilmdicke betrug ca. 50 µm.

Anschließend wurden die Härte nach König (DIN 53157), der Glanz nach Gardner bei 60°C (DIn 67530), die Anlösbarkeit durch verschiedene Lösemittel sowie die Teerbeständigkeit geprüft, wobei die Teerfleckenbeständigkeit der Lacke das für die Erfindung entscheidende Prüfkriterium ist.

Ferner wurden die Lacke zur Prüfung der Kälteflexibilität auf zuvor grundierte, 3 mm dicke Kunststoffplatten aus ®Bayflex 91 (Bayer AG, Leverkusen) aufgespritzt; 45 Minuten bei 80°C getrocknet und 14 Tage bei Raumtemperatur gelagert; die Trockenfilmdicke betrug ca. 35 µm.

Hieraus gefertigte, 2 cm breite und 15 cm lange Streifen wurden bei verschiedenen Temperaturen (Raumtemperatur; 5°C, 0°C, -5°C, ..., -40°C) in einer Kältekammer ca. 30 Minuten gelagert und anschließend bei der betreffenden Temperatur in der Kammer um einen 1-inch-Dorn gebogen. Diejenige Temperatur, bei der der Lackfilm reißt, gilt als Kriterium für die Kälteflexibilität. Die aus den Polyesterpolyolen der Beispiele 1 bis 11 hergestellten Lacke entsprachen danach hohen Anforderungen an die Elastizität auch bei tiefen Temperaturen.

In Tabelle II sind die Prüfergebnisse der Lackfilme, basierend auf den Polyesterpolyolen der Beispiele 1 bis 11 aufgeführt.

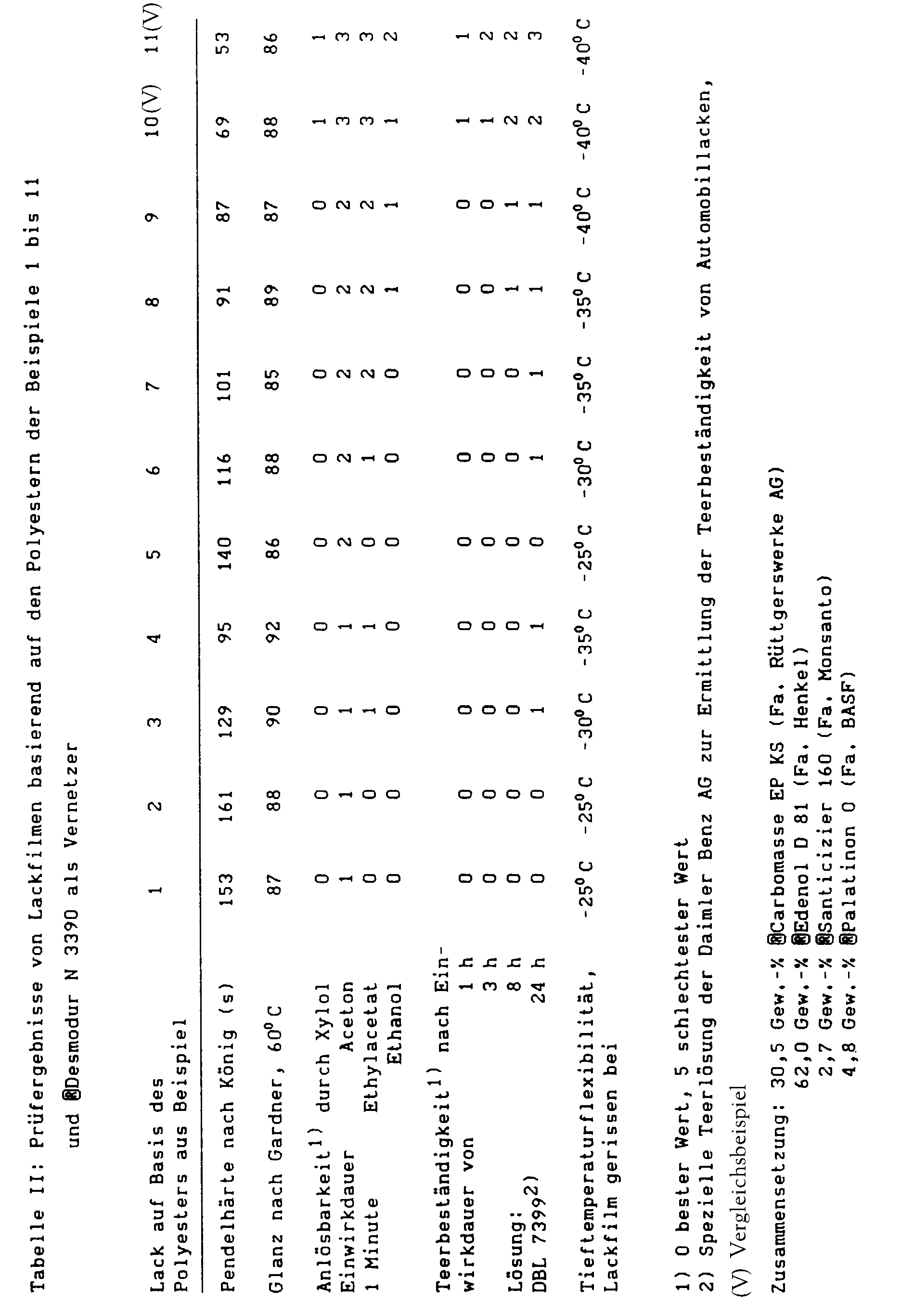

### Diskussion der Resultate:

Mit den Lacken auf Basis der Polyester der Beispiele 1 bis 11 können durchweg hochflexible Beschichtungen erzielt werden, wobei die Lacke der Beispiele 9 bis 11 die besten Werte hinsichtlich Elastizität erzielen. Die Resultate der Teerbeständigkeitsprüfung machen insbesondere die ganz ausgezeichnete Teerbeständigkeit der erfindungsgemäßen Lacke der Beispiele 1 bis 9 im Unterschied zu den Vergleichslacken 10 und 11 deutlich. Dieser Effekt zeigt sich auch in der Beständigkeit gegen diverse Lösungsmittel. Ein weiterer Vorteil der erfindungsgemäßen Lacke liegt in den wesentlich höheren Pendelhärten der Lackfilme im Unterschied zu den Vergleichslacken.

## Patentansprüche

1. Polyesterpolyole des Hydroxylzahlbereichs von 80 bis 250, die Umsetzungsprodukte von
a) 52 bis 60 Mol-% einer Polyolkomponente mit
b) 48 bis 40 Mol-% einer Dicarbonsäure-Komponente
darstellen, dadurch gekennzeichnet, daß
a) die Polyolkomponente aus (i) 10 bis 50 Mol-% eines zweiwertigen, aliphatischen Alkohols mit mindestens zwei Kohlenstoffatomen, der von Neopentylglykol verschieden ist, oder eines Gemischs mehrerer derartiger Alkohole, (ii) 5 bis 40 Mol-% eines mindestens dreiwertigen, aliphatischen Alkohols mit mindestens 3 Kohlenstoffatomen oder eines Gemischs mehrerer derartiger Alkohole, (iii) 10 bis 40 Mol-% Diole mit cycloaliphatischen Einheiten und (iv) 10 bis 60 Mol-% Neopentylglykol besteht, und
b) die Dicarbonsäurekomponente aus (v) 0 bis 47,5 Mol-% einer aliphatischen, gesättigten Dicarbonsäure oder einem Anhydrid einer derartigen Säure mit mindestens 2 Kohlenstoffatomen oder eines Gemischs mehrerer derartiger Säuren oder Anhydride und (vi) 52,5 bis 100 Mol-% einer aliphatischen, ungesättigten Dicarbonsäure oder deren Anhydrid mit mindestens 4 Kohlenstoffatomen oder Gemischen derartiger Säuren oder Anhydride besteht,
wobei sich die unter a) und b) gemachten Prozentangaben jeweils zu 100 ergänzen.

2. Polyesterpolyole gemäß Anspruch 1, dadurch gekennzeichnet, daß die Komponente b) aus 5 bis 40 Mol-% gesättigten Verbindungen (v) und 60 bis 95 Mol-% ungesättigten Verbindungen (vi) besteht.

3. Polyesterpolyole gemäß Anspruch 1 und 2, dadurch gekennzeichnet, daß
a) die Komponente (i) aus Hexandiol-1,6, die Komponente (ii) aus Trimethylolpropan, Glycerin, Pentaerythrit oder Gemischen derartiger Polyole, die Komponente (iii) aus 1,4-Bis-(hydroxymethyl)-cyclohexan und
b) die Komponente (v) aus Adipinsäure und die Komponente (vi) aus Maleinsäureanhydrid
besteht.

4. Verwendung der Polyesterpolyole gemäß Ansprüchen 1 bis 3, gegebenenfalls in Abmischung mit anderen organischen Polyhydroxylverbindunen als Bindemittelkomponente für Zweikomponenten-Polyurethanlacke, die Lackpolyisocyanate sowie gegebenenfalls die in der Polyurethanlacktechnologie üblichen Hilfs- und Zusatzmittel enthalten, bei der Herstellung von Lacküberzügen auf Kunststofformteilen.

5. Verwendung gemäß Anspruch 4, dadurch gekennzeichnet, daß es sich bei den Lacküberzügen zu versehenden Kunststofformteilen um flexible Kunststofformteile, wie sie im Automobilbau Verwendung finden, handelt.

6. Verwendung gemäß Ansprüchen 4 und 5, dadurch gekennzeichnet, daß es sich bei den mit Lacküberzügen zu versehenden Substraten um in Gemischtbauweise hergestellte Konstruktionen aus Metallen und flexiblen Kunststoffen, wie sie im Automobilbau Verwendung finden, handelt.

## Claims

1. Polyester-polyols with hydroxyl numbers in the range from 80 to 250, which represent reaction products of
a) 52 to 60 mol% of a polyol component with
b) 48 to 40 mol% of a dicarboxylic acid component,
characterized in that
a) the polyol component consists of (i) 10 to 50 mol% of a dihydric aliphatic alcohol having at least two carbon atoms, which is other than neopentyl glycol, or of a mixture of several such alcohols, (ii) 5 to 40 mol% of an at least trihydric aliphatic alcohol having at least 3 carbon atoms, or of a mixture of several such alcohols, (iii) 10 to 40 mol% of diols with cycloaliphatic units, and (iv) 10 to 60 mol% of neopentyl glycol, and
b) the dicarboxylic acid component consists of (v) 0 to 47.5 mol% of a saturated aliphatic dicarboxylic acid or an anhydride of such an acid having at least 2 carbon atoms, or of a mixture of several such acids or anhydrides, and (vi) 52.5 to 100 mol% of an unsaturated aliphatic dicarboxylic acid or an anhydride thereof having at least 4 carbon atoms, or of mixtures of such acids or anhydrides,
the percentages given under a) and b) adding up to 100 in each case.

2. Polyester-polyols according to Claim 1, characterized in that component b) consists of 5 to 40 mol% of saturated compounds (v) and 60 to 95 mol% of unsaturated compounds (vi).

3. Polyester-polyols according to Claims 1 and 2, characterized in that
a) component (i) consists of hexane-1,6-diol, component (ii) consists of trimethylolpropane, glycerol, pentaerythritol or mixtures of such polyols, and component (iii) consists of 1,4-bis (hydroxymethyl)cyclohexane, and
b) component (v) consists of adipic acid and component (vi) consists of maleic anhydride.

4. Use of the polyester-polyols according to Claims 1 to 3, optionally in a mixture with other organic polyhydroxyl compounds, as the binder component for two-component polyurethane lacquers which contain lacquer polyisocyanates and optionally the auxiliary substances and additives conventionally used in polyurethane lacquer technology, in the preparation of lacquer coatings on plastic mouldings.

5. Use according to Claim 4, characterized in that the plastic mouldings to be provided with lacquer coatings are flexible plastic mouldings such as those used in car construction.

6. Use according to Claims 4 and 5, characterized in that the substrates to be provided with lacquer coatings are structures made of metals and flexible plastics and manufactured by the mixed method of construction, such as those used in car construction.

## Revendications

1. Polyesterpolyols d'indice d'hydroxyle 80 à 250, consistant en produits de réarction de
a) 52 à 60 mol% d'un composant polyol, avec
b) 48 à 40 mol% d'un composant acide dicarboxylique,
caractérisés en ce que
a) le composant polyol consiste lui-même en (i) 10 à 50 mol% d'un alcool aliphatique divalent à au moins 3 atomes de carbone, autre que le néopentylglycol, ou d'un mélange de plusieurs de ces alcools, (ii) 5 à 40 mol% d'un alcool aliphatique au moins trivalent, à au moins 3 atomes de carbone ou d'un mélange de plusieurs de tels alcools, (iii) 10 à 40 mol% de diols à motifs cycloaliphatiques et (iv) 10 à 60mol% de néopentylglycol, et
b) le composant acide dicarboxylique consiste en (v) 0 à 47,5 mol% d'un acide dicarboxylique aliphatique saturé ou d'un anhydride d'un tel acide, à au moins 2 atomes de carbone, ou d'un mélange de plusieurs de tels acides ou anhydrides, et (vi) 52,5 à 100 mol% d'un acide dicarboxylique aliphatique insaturé ou de son anhydride, à au moins 4 atomes de carbone, ou de mélanges de tels acides ou anhydrides,
les pourcentages indiqués ci-dessus sous a) et b) se complétant dans tous les cas à 100.

2. Polyesterpolyols selon la revendication 1, caractérisés en ce que le composant b) consiste en 5 à 40 mol% de composés saturés (v) et 60 à 95 mol% de composés insaturés (vi).

3. Polyesterpolyols selon les revendications 1 et 2, caractérisés en ce que
a) le composant (i) consiste en le 1,6-hexanediol, le composant (ii) en le triméthylolpropane, le glycérol, le pentaérythritol ou un mélange de ces polyols, le composant (iii) consiste en le 1,4-bis(hydroxyméthyl)cyclohexane et
b) le composant (v) consiste en l'acide adipique et le composant (vi) en l'anhydride maléique.

4. Utilisation des polyesterpolyols selon les revendications 1 à 3, le cas échéant en mélange avec d'autres composés organiques polyhydroxylés, en tant que composants de liants pour des vemis de polyuréthanes à deux composants qui contiennent des polyisocyanates pour vernis et, le cas échéant, les produits auxiliaires et additifs usuels dans l'industrie des vemis de polyuréthanes, pour l'application de revêtements de peintures ou vernis sur des pièces moulées en matières plastisques.

5. Utilisation selon la revendication 4, caractérisée en ce que les pièces moulées en matières plastiques à revêtir consistent en pièces de matières plastiques flexibles du type utilisé dans la construction d'automobiles.

6. Utilisation selon les revendications 4 et 5, caractérisée en ce que les supports à revêtir consistent en constructions mixtes en métaux et matières plastiques flexibles, du type utilisé dans la construction automobile.
